# EUROPÄISCHE PATENTSCHRIFT

(11) **EP 1 754 413 B1**
(45) Veröffentlichungstag und Bekanntmachung des Hinweises auf die Patenterteilung: **25.11.2009**
(21) Anmeldenummer: 06013904.5
(22) Anmeldetag: 05.07.2006
(51) Int. Cl.: A23B 9/02

(54) **Verfahren und Vorrichtung zum Sterilisieren poröser Partikel**
Method and apparatus for sterilising porous particles
Procédé et dispositif pour stériliser des particules poreuses

(30) Priorität: 28.07.2005 DE 102005035926
(43) Veröffentlichungstag der Anmeldung: 21.02.2007
(73) Patentinhaber: ZENTIS GmbH & Co. KG, 52070 Aachen (DE)
(72) Erfinder: Baumer, Johannes, 4710 Lontzen (BE); Becker, Jürgen, 52477 Alsdorf (DE); Heisterüber, Dominik, 52249 Eschweiler (DE); Stauber, Dieter, 52134 Herzogenrath (DE); Otte, Dietmar, 52076 Aachen (DE)
(74) Vertreter: Bauer, Dirk

(56) Entgegenhaltungen:
- WO-A-00/25595
- WO-A-99/59418
- GB-A- 814 756
- US-A- 4 473 593

## Beschreibung

Getreidebasierte Partikel in Form ganzer gequetschter Getreidekörner - beispielsweise so genannte "Haferflocken", gepuffte Getreidekörner wie "Puffreis", grob geschrotetes Getreide und Getreidemehlzubereitungen beispielsweise in gerösteter Form als so genannte "Cornflakes", Getreideextrudate und andere extrudierte Produkte weisen auch als Zwischenprodukte für die Lebensmittelherstellung eine natürliche und aus hygienischer wie gesundheitlicher Sicht zunächst unbedenkliche Belastung mit Keimen auf.

Sollen derartige Partikel jedoch in wasserhaltige Lebensmittelzubereitungen eingebracht werden, so stellt dies hohe Anforderungen an Lebensmittelchemie und -technik, da sie mit ihrer großen benetzbaren Oberfläche einen idealen Nährboden insbesondere für Pilze wie Schimmel und Hefen, aber auch für verschiedene Bakterien wie beispielsweise die ubiquitären Klostridien bilden. Bei typischen wässrigen Medien, insbesondere bei Milch- oder Joghurtbasierten Produkten liegt der pH-Wert deutlich oberhalb 4,5, so dass eine Pasteurisierung - also eine kurzzeitige Erhitzung auf 60 bis 95 °C - im Allgemeinen als zur Abtötung von Mikroorganismen nicht ausreichend angesehen wird.

Sterilisationsverfahren sind zwar in der Lebensmitteltechnik grundsätzlich allgemein bekannt: Durch 15- bis 20-minütiges Erhitzen auf eine Temperatur zwischen 110 und 135 °C werden in dem in flüssiger Form oder in wässriger Phase (beispielsweise in Soße, Saft oder Sud) vorliegenden Lebensmittel alle Mikroorganismen einschließlich Sporen und anderer Dauerformen abgetötet. Durch solche Verfahren kann die Haltbarkeit des Lebensmittels bis auf mehrere Jahre gesteigert werden. Diese Verfahren sind jedoch für die Sterilisierung trockener poröser Partikel nicht geeignet, da diese in der wässrigen Phase Wasser aufnehmen und quellen und so ihre Konsistenz in unerwünschter Weise verändern würden.

Allgemein bekannt sind weiterhin insbesondere in der Medizin- und Lebensmitteltechnik die Heißdampf- und Heißluftsterilisation von Geräten. Bei der Dampfsterilisation (auch: "Autoklavieren") werden insbesondere kleinere Behälter, Handhabungsgeräte oder chirurgische Instrumente Dampf über 15 bis 20 Minuten unter einem Überdruck von 2,3 bis 4 bar mit einer Temperatur von 105 bis 134 °C ausgesetzt. Abgesehen davon, dass unter Überdruck poröse - also Lufteinschlüsse aufweisende - Partikel zum Kollabieren neigen, sind auch diese Verfahren für die Entkeimung quellfähiger Getreidepartikel wiederum aus dem oben genannten Grund ungeeignet.

Die Heißluftsterilisation unter bewegter trockener Heißluft erfordert gegenüber der Dampfsterilisation eine Temperatur von 180 bis 200 °C über mindestens 30 Minuten, um eine vergleichbare Sterilqualität zu erzielen. Nach einer derartigen Behandlung weisen die typischen getreidebasierten Partikel bereits deutliche Verbrennungsspuren auf und wären für die Verwendung in Lebensmitteln nicht mehr brauchbar.

Allerdings ist die vorgenannte Behandlung beispielsweise bei der Röstung von Kaffee- oder Kakao-Bohnen bekannt und auch erwünscht, wie es aus der GB 814 756 A hervorgeht.

Als Beispiel für ein Verfahren zum Sterilisieren mittels Heißdampf sei das Verfahren gemäß der WO 99/59418 genannt, im Zuge dessen partikelförmige Lebensmittel nach der Behandlung mit Heißdampf auf über 170°C geheizt werden.

Aus der WO 00/25595 geht ein Verfahren zur Reduzierung des Schimmelgehaltes von Getreidekernen hervor, bei dem die Keimfähigkeit der Kerne nicht beeinträchtigt wird, so dass diese beispielsweise noch zum Brauen von Bier herangezogen werden können. Hierzu werden die Getreidekerne durch Dampf erhitzt.

### Aufgabe

Der Erfindung liegt die Aufgabe zugrunde, ein Verfahren zur Sterilisierung poröser Partikel sowie eine Vorrichtung zur Ausführung des Verfahrens vorzuschlagen.

### Lösung

Nach der Erfindung wird vorgeschlagen, dass die Partikel in einem Wirbelbett einem auf eine Temperatur zwischen 70 und 180 °C aufgeheizten Gas mit einem Wassergehalt zwischen 8 und 200 g/kg ausgesetzt werden. Der Wassergehalt (Wasserdampfbeladung des Gas-Dampf-Gemisches) ist hier wie im Mollier-Diagramm in Massenanteilen der trockenen Luft angegeben. In dem Gas stellt sich so eine relative Feuchte von 2 bis 100 % ein.

Als "Wirbelbett" (auch "Wirbelschicht" oder "Fließbett") wird eine durch ein Gas als Trägermedium aufgelockerte, fließfähige Masse aus feinkörnigen Feststoffpartikeln bezeichnet. Wird eine Schüttung der Partikel beispielsweise aus einem perforierten Boden von unten mit dem Gas angeströmt, so stellt sich bei einer bestimmten charakteristischen Strömungsgeschwindigkeit an den einzelnen Partikeln im statistischen Mittel ein Gleichgewicht zwischen der Strömungskraft und der Gewichtskraft ein. Die Verwendung von Wirbelschichtreaktoren ist auch in der Lebensmitteltechnik insbesondere zum Mischen, Fördern und Trocknen feinkörniger Produkte grundsätzlich bekannt.

Die erfindungsgemäße Einstellung einerseits der Temperatur und andererseits der Feuchte des Gases im Rahmen der dem Grundsatz nach bekannten Verfahren zur Sterilisierung ermöglicht eine Behandlung von porösen Partikeln ohne deren Struktur zu schädigen. Durch die Verwendung eines Wirbelbetts werden die Partikel dabei sehr gleichmäßig dem Gas ausgesetzt.

Bevorzugt weist das Gas eine Temperatur zwischen 120 und 145 °C auf. In diesem Temperaturbereich können insbesondere Getreidepartikel wie gequetschte Flocken und Extrudate ohne Verbrennungserscheinungen oder andere Strukturänderungen mit dem erfindungsgemäßen Verfahren sterilisiert werden.

Weiterhin weist das Gas vorzugsweise einen Wassergehalt von etwa 100 g/kg auf. Bei einem Temperaturbereich von 120 bis 145 °C stellt sich dann eine relative Feuchte von etwa 3 % ein. Der Wasserdampf beschleunigt als - gegenüber Luft - sehr guter Wärmeträger die Durchwärmung der Partikel und ermöglicht gegenüber reiner Heißluft eine verkürzte Verfahrensdauer. Bei erfindungsgemäß eingestelltem Wassergehalt können insbesondere Getreideprodukte sterilisiert werden, ohne dass diese Feuchtigkeit aufnehmen und quellen.

In einer besonders bevorzugten Ausführungsform des erfindungsgemäßen Verfahrens ist das Gas sauerstoffarm. Bei der Verarbeitung großer Mengen von insbesondere getreidebasierten Partikeln ist eine gewisse Staubentwicklung bei vertretbarem Aufwand unvermeidlich. Durch die Verwendung eines sauerstoffarmen, und somit reaktionsträgen Gases oder Gasgemisches wird das Risiko von Staubexplosionen wirksam reduziert.

Insbesondere kann das Gas im Wesentlichen aus Stickstoff oder Kohlendioxid bestehen. Beide stehen als technische Gase preisgünstig zur Verfügung, sind lebensmitteltechnisch neutral und mit geringem technischen Aufwand einsetzbar. Aufgrund seiner gegenüber Luft geringeren spezifischen Dichte stellt die Verwendung von Stickstoff zudem geringere Anforderungen an Sicherheitsvorkehrungen sowie an die Leckagekontrolle der verwendeten Vorrichtung.

Besonders bevorzugt steht im Rahmen eines erfindungsgemäßen Verfahrens das Wirbelbett unter Überdruck. So wird die Kontamination des Innern der verwendeten Vorrichtung durch Lecks wirksam vermieden. Insbesondere bevorzugt ist ein Überdruck von bis zu 3 bar. Dieser Druckbereich erfordert einerseits einen mit Standardbauteilen ohne weiteres realisierbaren konstruktiven Aufwand der verwendeten Vorrichtung. Andererseits werden insbesondere getreidebasierte Extrudate in diesem Druckbereich praktisch nicht beschädigt.

Im Rahmen eines erfindungsgemäßen Verfahrens werden weiterhin bevorzugt die Partikel 10 bis 20 Minuten dem Gas ausgesetzt. Insbesondere handelsübliche Getreideextrudate (als Halbfertigwaren der Lebensmittelindustrie) mit einer typischen Schüttdichte oberhalb von 250 g/dm³ werden in diesem Zeitraum zuverlässig sterilisiert. Insbesondere werden die Partikel bevorzugt etwa 15 Minuten dem Gas ausgesetzt.

In einer besonders vorteilhaften Ausprägung des erfindungsgemäßen Verfahrens werden die Partikel dem Wirbelbett in Chargen diskontinuierlich zugeführt und von diesem in Chargen abgeführt. Ein solches diskontinuierliches Verfahren erfordert gegenüber der Alternative eines kontinuierlichen Betriebs einen geringen konstruktiven wie organisatorischen Aufwand. Andererseits ist das Verweilzeitverhalten sehr eng: Alle Partikel einer Charge bleiben über die gleiche Dauer im Behälter weil sie zum gleichen Zeitpunkt jeweils zu- und abgeführt werden. Während bei einem kontinuierlichen Verfahren mit kontinuierlicher Zu- und Abfuhr von Partikeln lediglich eine mittlere Qualität der Sterilisierung zu garantieren und eine gewisse statistische Streuung unvermeidbar ist, wird mit einem solchen diskontinuierlichen erfindungsgemäßen Verfahren eine sehr gleichmäßige Sterilqualität der Partikel erreicht.

Die Partikel werden im Rahmen eines erfindungsgemäßen Verfahren vorzugsweise zugleich bis auf eine Restfeuchte von weniger als 1 % getrocknet. So wird ein weiterer in der Lebensfertigung - angesichts der bei Lagergut nur unter hohem Aufwand vermeidbaren Aufnahme von Feuchtigkeit - notwendiger Verfahrensschritt in das erfindungsgemäße Verfahren integriert und damit der Gesamtaufwand in der Lebensmittelherstellung reduziert.

Weiterhin wird erfindungsgemäß vorgeschlagen eine Vorrichtung zum Sterilisieren poröser Partikel mit einem Behälter, der von einem heißen, feuchten Gas derart durchströmbar ist, dass die Partikel in diesem ein Wirbelbett ausbilden, mit einer Heizeinrichtung, mittels derer das Gas heizbar und mit einer Feuchteinrichtung, mittels derer dem Gas Wasserdampf zuführbar ist. Eine derartige Vorrichtung ermöglicht die Ausführung des oben beschriebenen erfindungsgemäßen Verfahrens.

Bevorzugt weist eine erfindungsgemäße Vorrichtung eine Entstaubungseinrichtung auf, mittels derer die Partikel von einer staubförmigen Beifracht trennbar sind. Durch das Trennen der Partikel von - insbesondere bei der Verarbeitung von Cerealien unweigerlich auftretenden - Stäuben kann mittels einer solchen erfindungsgemäßen Vorrichtung ein für die weitere Verarbeitung besonders geeignetes staubfreies, rieselfähiges Produkt hergestellt werden. Durch die Integration der Entstaubungseinrichtung in die erfindungsgemäße Vorrichtung wird die Aufrechterhaltung der Sterilbedingungen während der Verarbeitung erleichtert.

In einer besonders vorteilhaften Ausführungsform einer erfindungsgemäßen Vorrichtung ist die Beifracht mittels der Entstaubungseinrichtung kontinuierlich dem Gas entziehbar. Durch die Entstaubung der zirkulierenden Gasströmung können die Sterilbedingungen besonders einfach aufrecht erhalten werden.

Besonders bevorzugt ist der Behälter einer erfindungsgemäßen Vorrichtung sterilisierbar. Insbesondere besteht ein solcher Behälter aus Edelstahl. Die Kontamination von Partikeln durch Kontakt mit dem Behälter wird in einem sterilen Behälter wirksam vermieden.

Weiterhin ist eine erfindungsgemäße Vorrichtung vorteilhafter Weise bis 4 bar druckbeständig. So kann - wiederum wie oben beschrieben - das Wirbelbett unter einen Überdruck gesetzt werden. Bis zu einem Überdruck von 3 bar ist die erfindungsgemäße Vorrichtung dann mit ausreichender Sicherheit druckbeständig.

Vorzugsweise weist der Behälter einer erfindungsgemäßen Vorrichtung einen zum Entleeren um eine horizontale Achse drehbaren Anströmboden auf. Durch Drehen des Anströmbodens um die Achse werden in dem Behälter befindliche Partikel durch die Erdschwere nach unten entleert und können ohne weitere aufwändige konstruktive Maßnahmen durch ein Ventil in die weitere Verarbeitungskette oder in eine sterile Abfüllung überführt werden.

### Ausführungsbeispiel

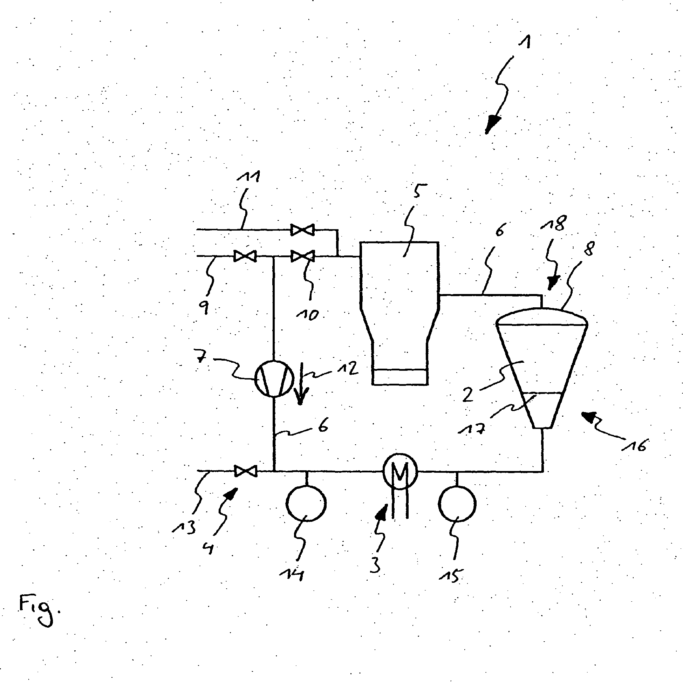

Die Erfindung wird nachfolgend anhand eines Ausführungsbeispiels erläutert. Die in der einzigen Zeichnungsfigur gezeigte erfindungsgemäße Vorrichtung 1 weist einen Behälter 2, eine Heizeinrichtung 3, eine Feuchteinrichtung 4 und eine Entstaubungseinrichtung 5 auf. Die Heizeinrichtung 3, der Behälter 2 und die Entstaubungseinrichtung 5 sind in einem geschlossenen Kreislauf mit Rohrleitungen 6 verbunden. Zwischen der Entstaubungseinrichtung 5 und der Heizeinrichtung 3 weist die Vorrichtung 1 einen Ventilator 7 auf.

Zur Inbetriebnahme der Vorrichtung 1 wird der Deckel 8 des zuvor sterilisierten Behälters 2 geöffnet und dieser teilweise mit einer nicht dargestellten lockeren Schüttung - etwa 265 g/dm³ - aus etwa 70 kg eines porösen, aber knusprigen, sandfarbenen, kugelförmiges Extrudats auf Weizen- und Reisbasis mit einem Partikeldurchmesser von 3 bis 4 mm, so genannten "Weizen-Reis-Crisps" gefüllt. Alternativ können die Partikel auch bei geschlossenem Deckel durch Unterdruckförderung in den Behälter 2 gefördert werden.

Anschließend wird die Vorrichtung 1 über einen zwischen dem Ventilator 7 und der Entstaubungseinrichtung 5 angeordneten Gasanschluss 9 mit gleichfalls nicht dargestellten sterilem Stickstoffgas befüllt. Hierzu wird ein zwischen dem Gasanschluss 9 und der Entstaubungseinrichtung 5 angeordnetes Ventil 10 geschlossen und ein wiederum zwischen diesem und der Entstaubungseinrichtung 5 angebrachter Abluftanschluss 11 geöffnet.

Sobald aus dem Abluftanschluss 11 Stickstoff strömt, werden der Gasanschluss 9 und der Abluftanschluss 11 geschlossen und das Ventil 10 geöffnet. Das Gas wird mittels des Ventilators 7 der Heizeinrichtung 3 zugeführt. Über einen in Strömungsrichtung 12 hinter dem Ventilator 7 angeordneten Dampfanschluss 13 wird dem Gas nach Bedarf (gleichfalls nicht dargestellter) Wasserdampf zugeführt und anschließend die Feuchte mittels eines Feuchtemessgerätes 14 gemessen. Die Temperatur des mit Wasserdampf angereicherten Gases wird in der Heizeinrichtung 3 auf 145 °C gebracht und anschließend wiederum mittels eines Temperaturmessgeräts 15 gemessen.

Das Gas wird von der Unterseite 16 durch einen perforierten Anströmboden 17 in den Behälter 2 mit den Partikeln geführt. So wird eine möglichst gleichmäßige Strömung des Gases erreicht. Die Partikel werden durch das einströmende Gas in ein Wirbelbett überführt. In dem Wirbelbett werden die Partikel während einer Prozesszeit von 15 Minuten sterilisiert und zugleich bis auf eine Restfeuchte von weniger als 1 % Massenanteil getrocknet. Von der Oberseite 18 des Behälters 2 wird das Gas in die Entstaubungseinrichtung 5 - einen Fliehkraftabscheider mit nicht dargestelltem nachgeschaltetem Feinstfilter - abgeführt. Das entstaubte Gas wird aus der Entstaubungseinrichtung 5 wieder dem Ventilator 7 zugeführt und durchläuft den Kreislauf von neuem.

Nach Beendigung der Sterilisierung wird der Gasstrom unterbrochen und an der Unterseite 16 des Behälters 2 ein nicht dargestellter Durchlass in einen Entnahmeschacht geöffnet, durch den die Partikel wahlweise steril in einer gleichfalls nicht dargestellten Packvorrichtung portionsweise verpackt werden oder unmittelbar in die weitere Verarbeitung geführt werden können.

### In den Figuren sind

- 1: Vorrichtung
- 2: Behälter
- 3: Heizeinrichtung
- 4: Feuchteinrichtung
- 5: Entstaubungseinrichtung
- 6: Rohrleitung
- 7: Ventilator
- 8: Deckel
- 9: Gasanschluss
- 10: Ventil
- 11: Abluftanschluss
- 12: Strömungsrichtung
- 13: Dampfanschluss
- 14: Feuchtemessgerät
- 15: Temperaturmessgerät
- 16: Unterseite
- 17: Anströmboden
- 18: Oberseite

## Patentansprüche

1. Verfahren zum Sterilisieren poröser Partikel, wobei die Partikel in einem Wirbelbett einem auf eine Temperatur zwischen 70 und 180 °C aufgeheizten Gas mit einem Wassergehalt zwischen 8 und 200 g/kg ausgesetzt werden.

2. Verfahren nach dem vorgenannten Anspruch, ***dadurch gekennzeichnet, dass*** das Gas eine Temperatur zwischen 120 und 145 °C aufweist.

3. Verfahren nach einem der vorgenannten Ansprüche, ***dadurch gekennzeichnet, dass*** das Gas einen Wassergehalt von etwa 100 g/kg aufweist.

4. Verfahren nach einem der vorgenannten Ansprüche, ***dadurch gekennzeichnet, dass*** das Gas sauerstoffarm ist.

5. Verfahren nach dem vorgenannten Anspruch, ***dadurch gekennzeichnet, dass*** das Gas im Wesentlichen aus Stickstoff oder Kohlendioxid besteht.

6. Verfahren nach einem der vorgenannten Ansprüche, ***dadurch gekennzeichnet, dass*** das Wirbelbett unter Überdruck steht.

7. Verfahren nach dem vorgenannten Anspruch, ***dadurch gekennzeichnet, dass*** das Wirbelbett unter einem Überdruck von bis zu 3 bar steht.

8. Verfahren nach einem der vorgenannten Ansprüche, ***dadurch gekennzeichnet, dass*** die Partikel 10 bis 20 Minuten dem Gas ausgesetzt werden.

9. Verfahren nach dem vorgenannten Anspruch, ***dadurch gekennzeichnet, dass*** die Partikel etwa 15 Minuten dem Gas ausgesetzt werden.

10. Verfahren nach einem der vorgenannten Ansprüche, ***dadurch gekennzeichnet, dass*** die Partikel dem Wirbelbett in Chargen diskontinuierlich zugeführt und von diesem in Chargen abgeführt werden.

11. Verfahren nach einem der vorgenannten Ansprüche, ***dadurch gekennzeichnet, dass*** die Partikel zugleich bis auf eine Restfeuchte von weniger als 1 % getrocknet werden.

12. Vorrichtung (1) zum Sterilisieren poröser Partikel mit einem Behälter (2), der von einem heißen, feuchten Gas derart durchströmbar ist, dass die Partikel in diesem ein Wirbelbett ausbilden, mit einer Heizeinrichtung (3), mittels derer das Gas heizbar und mit einer Feuchteinrichtung (4), mittels derer dem Gas Wasserdampf zuführbar ist.

13. Vorrichtung (1) nach dem vorgenannten Anspruch, ***gekennzeichnet durch*** eine Entstaubungseinrichtung (5), mittels derer die Partikel von einer staubförmigen Beifracht trennbar sind.

14. Vorrichtung nach dem vorgenannten Anspruch, ***dadurch gekennzeichnet, dass*** die Beifracht mittels der Entstaubungseinrichtung kontinuierlich dem Gas entziehbar ist.

15. Vorrichtung (1) nach einem der Ansprüche 12 bis 14, ***dadurch gekennzeichnet, dass*** der Behälter (2) sterilisierbar ist.

16. Vorrichtung (1) nach einem der Ansprüche 12 bis 15, ***dadurch gekennzeichnet, dass*** die Vorrichtung (1) bis 4 bar druckbeständig ist.

17. Vorrichtung (1) nach einem der Ansprüche 12 bis 16, ***dadurch gekennzeichnet, dass*** der Behälter einen zum Entleeren um eine horizontale Achse drehbaren Anströmboden aufweist.

## Claims

1. A method for sterilizing porous particles wherein the particles are subjected in a fluidized bed to a gas heated to a temperature between 70 and 180 °C with a water content between 8 and 200 g/kg.

2. A method according to the previous claim, ***characterized in that*** the gas has a temperature between 120 and 145 °C.

3. A method according to any of the previous claims, ***characterized in that*** the gas has a water content of about 100 g/kg.

4. A method according to any of the previous claims, ***characterized in that*** the gas is oxygen-deficient.

5. A method according to the previous claim, ***characterized in that*** the gas consists essentially of nitrogen or carbon dioxide.

6. A method according to any of the previous claims, ***characterized in that*** the fluidized bed is overpressurized.

7. A method according to the previous claim, ***characterized in that*** the fluidized bed is overpressurized to up to 3 bar.

8. A method according to any of the previous claims, ***characterized in that*** the particles are subjected to the gas for 10 to 20 minutes.

9. A method according to the previous claim, ***characterized in that*** the particles are subjected to the gas for about 15 minutes.

10. A method according to any of the previous claims, ***characterized in that*** the particles are discontinuously fed to the fluidized bed in batches and led away from it in batches.

11. A method according to any of the previous claims, ***characterized in that*** the particles are dried to a residual moisture content of less than 1 % at the same time.

12. An apparatus (1) for sterilizing porous particles with a vessel (2), through which a hot, wet gas can flow in such a way that the particles form a fluidized bed therein, with a heating device (3), with the help of which the gas can be heated, and with a wetting device (4), with the help of which water vapor can be supplied to the gas.

13. An apparatus (1) according to the previous claim, ***characterized by*** a dust removal device (5), with the help of which a powdery accompanying load can be separated from the particles.

14. An apparatus according to the previous claim, ***characterized in that*** the accompanying load can be continuously removed from the gas by means of the dust removal device.

15. An apparatus (1) according to any of claims 12 to 14, ***characterized in that*** the vessel (2) can be sterilized.

16. An apparatus (1) according to any of claims 12 to 15, ***characterized in that*** the apparatus (1) is pressure resistant up to 4 bar.

17. An apparatus (1) according to any of claims 12 to 16, ***characterized in that*** the vessel has a distributor plate that can be rotated about a horizontal axis for discharging.

## Revendications

1. Procédé destiné à la stérilisation de particules poreuses, lesdites particules étant exposées, dans un lit fluidisé, à un gaz réchauffé à une température comprise entre 70 et 180 °C et ayant une teneur en eau comprise entre 8 et 200 g/kg.

2. Procédé selon la revendication précédente, **caractérisé en ce que** ledit gaz présente une température comprise entre 120 et 145 °C.

3. Procédé selon l'une des revendications précédentes, **caractérisé en ce que** ledit gaz présente une teneur en eau d'environ 100 g/kg.

4. Procédé selon l'une des revendications précédentes, **caractérisé en ce que** ledit gaz présente une faible teneur en oxygène.

5. Procédé selon la revendication précédente, **caractérisé en ce que** ledit gaz est essentiellement constitué d'azote et de dioxyde de carbone.

6. Procédé selon l'une des revendications précédentes, **caractérisé en ce que** ledit lit fluidisé présente une surpression interne.

7. Procédé selon la revendication précédente, **caractérisé en ce que** ledit lit fluidisé présente une surpression interne pouvant atteindre 3 bars.

8. Procédé selon l'une des revendications précédentes, **caractérisé en ce que** lesdites particules sont exposées audit gaz pendant 10 à 20 minutes.

9. Procédé selon la revendication précédente, **caractérisé en ce que** lesdites particules sont exposées audit gaz pendant environ 15 minutes.

10. Procédé selon l'une des revendications précédentes, **caractérisé en ce que** lesdites particules sont introduites dans ledit lit fluidisé de façon discontinue par lots et qu'elles en sont retirées par lots.

11. Procédé selon l'une des revendications précédentes, **caractérisé en ce que** lesdites particules sont en même temps séchées de façon à ce que leur taux d'humidité résiduelle soit inférieur à 1 %.

12. Dispositif (1) destiné à la stérilisation de particules poreuses, avec un récipient (2) pouvant être traversé par un flux de gaz chaud et humide de façon à ce que lesdites particules y forment un lit fluidisé, avec un dispositif de chauffage (3) pouvant réchauffer ledit gaz et avec un dispositif d'humidification (4) pouvant introduire de la vapeur d'eau dans ledit gaz.

13. Dispositif (1) selon la revendication précédente, **caractérisé par** un dispositif de dépoussiérage (5) pouvant être mis en oeuvre pour séparer lesdites particules d'une charge de poussière qu'elles charrient.

14. Dispositif selon la revendication précédente, **caractérisé en ce que** ladite charge charriée peut être enlevée du gaz de façon continue en mettant en oeuvre ledit dispositif de dépoussiérage.

15. Dispositif (1) selon l'une des revendications 12 à 14, **caractérisé en ce que** ledit récipient (2) peut être stérilisé.

16. Dispositif (1) selon l'une des revendications 12 à 15, **caractérisé en ce que** ledit dispositif (1) résiste à une pression pouvant atteindre 4 bars.

17. Dispositif (1) selon l'une des revendications 12 à 16, **caractérisé en ce que** ledit récipient présente, pour le vider, un fond de distribution pouvant être tourné autour de l'axe horizontal.
